Europäisches Patentamt

European Patent Office

Office européen des brevets

(19)

(11) Publication number: **0 152 496**
**B1**

# (12) EUROPEAN PATENT SPECIFICATION

(45) Date of publication of patent specification: **07.09.88**

(51) Int. Cl.⁴: **H 04 N 5/232**

(21) Application number: **84101628.0**

(22) Date of filing: **17.02.84**

(54) **Electronic photographing apparatus.**

(43) Date of publication of application:
**28.08.85 Bulletin 85/35**

(45) Publication of the grant of the patent:
**07.09.88 Bulletin 88/36**

(84) Designated Contracting States:
**DE FR GB IT NL**

(56) References cited:
**EP-A-0 080 350**
**DE-B-2 216 949**
**US-A-4 262 301**
**US-A-4 303 322**

(73) Proprietor: **OLYMPUS OPTICAL CO., LTD.**
**43-2, 2-chome, Hatagaya Shibuya-ku**
**Tokyo 151 (JP)**

(72) Inventor: **Mizokami, Kazunori**
**131 Olympus-Kyodo-Jutaku 7-14-11, Oowada-machi**
**Hachioji-shi Tokyo (JP)**
Inventor: **Kimura, Tadashi**
**3-11-6-102, Shiroganedai**
**Minato-ku Tokyo (JP)**
Inventor: **Kikuchi, Juro**
**305 Olympus-Oowada Dokushin-Ryo 4-22-13**
**Oowada-machi Hachioji-shi Tokyo (JP)**
Inventor: **Tamagawa, Akira**
**1-7-7-224, Higashihirayama**
**Hino-shi Tokyo (JP)**
Inventor: **Yunoki, Yutaka**
**402 Villa-Kunitachi 4-23-11, Higashi**
**Kunitachi-shi Tokyo (JP)**
Inventor: **Nakamura, Kazuo**
**1540-115, Kawaguchi-machi**
**Hachioji-shi Tokyo (JP)**

(74) Representative: **Kuhnen, Wacker & Partner**
**Schneggstrasse 3-5 Postfach 1729**
**D-8050 Freising (DE)**

Courier Press, Leamington Spa, England.

## Description

The present invention relates to an electronic photographing apparatus and, more particularly, to an electronic photographing apparatus having both an automatic exposure metering function and an automatic exposing function, according to the pre-characterizing part of claim 1.

The automatic exposure metering unit generally employed in the electronic photographing apparatus or electronic camera functions according to the full-area averaging method, that is it measures the average amount of exposure on the finder screen. Since the exposure on some specific areas of the finder screen can not be measured by the full-area averaging method, some portions of the picture may be under- or overexposed. In short, the exposure of each portion of the finder screen can not be measured two-dimensionally by the full-area averaging method.

In USA—A—4,262,301 issued on April 14, 1981 defining the generic art, an electronic imaging camera is disclosed which converts the optical image into electronic image signals which represent the optical image in electronic data form, wherein said signals are stored in signal receiving and storing means. In this electronic imaging camera a matrix area of photosensitive elements or sights is employed which upon exposure to a source of lights generates an electrical charge or image signal that is proportional to the intensity of the light incident thereupon. This area of photosensitive elements realises a full-area averaging method suffering on the same disadvantages described above.

The object of the present invention is therefore to provide an electronic photographing apparatus capable of two-dimensionally discriminating whether the amount of exposure for a view finder image to be photographed is proper or not.

According to the present invention a generated video signal is supplied to two comparators and is converted to a binary signal according to reference voltages having a level slightly lower than the saturation level of the video signal, and a level slightly higher than the black level of the video signal and which are applied to the comparators, respectively. The binary signals are supplied to a video signal processing circuit to be converted to a binary video signal. When the binary video signal is supplied to the display of the electric finder, an image is displayed according to its over- or/and underexposure. When the binary video signal is supplied to an automatic exposure unit, the exposure for a view finder image is automatically controlled according to its over-or/ and underexposure.

This invention can be more fully understood from the following detailed description when taken in conjunction with the accompanying drawings, in which:

Fig. 1 is a block circuit diagram showing an example of electronic photographing apparatus according to the present invention;

Fig. 2 is a time chart of signals appearing through the circuit shown in Fig. 1;

Fig. 3 is an image viewed on the finder screen;

Fig. 4 shows an image displayed on the display of the electric finder; and

Fig. 5 is a view showing the numeral relationship of poor quality picture elements for apertures and shutter speeds.

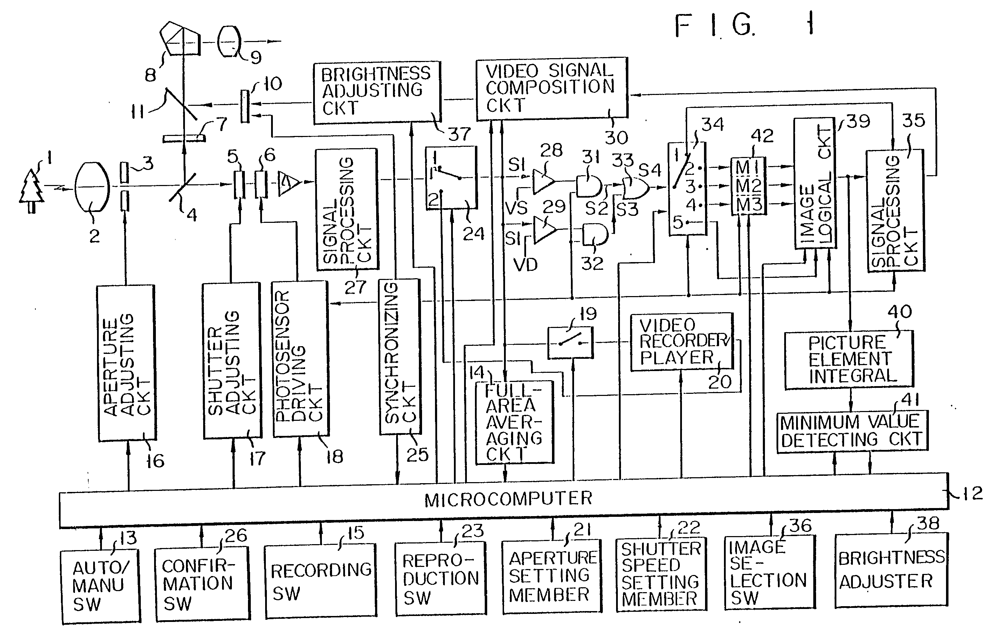

Referring to Fig. 1, the optical image of an object 1 is imaged on a photosensor 6 through an objective lens 2, aperture 3, half mirror 4 and shutter 5. The optical image is also imaged on a finder screen 7 through the half mirror 4. The optical image on the finder screen 7 can be viewed through a half mirror 11, prism 8 and eyepiece lens 9. A display image on a display 10 is projected to the half mirror 11 and can also be viewed through the eyepiece lens 9.

A control device or microcomputer 12 serves to control the whole of an electronic photographing apparatus and has an auto/manual selection switch 13 connected thereto. When the selection switch 13 is set to "auto", the microcomputer 12 achieves automatic exposure photographing. More specifically, in response to the output signal of an external exposure metering circuit (not shown) or a full-area averaging circuit 14, the microcomputer 12 supplies control signals to an aperture control circuit 16, shutter speed control circuit 17, photosensor driving circuit 18, recording switch 19, and recording and reproducing section 20 every time the recording switch 15 is operated. When the selection switch 13 is set to "manual", the microcomputer 12 reads the setpoints of the manual aperture and the shutter setting members 21 and 22, determines the aperture and shutter speed and records them every time the recording switch 19 is operated. When a reproduction switch 23 is pushed, a reproduced video signal is read out of the recording and reproducing section 20, and a reproduction switch 24 is changed over from a contact 1 to another contact 2.

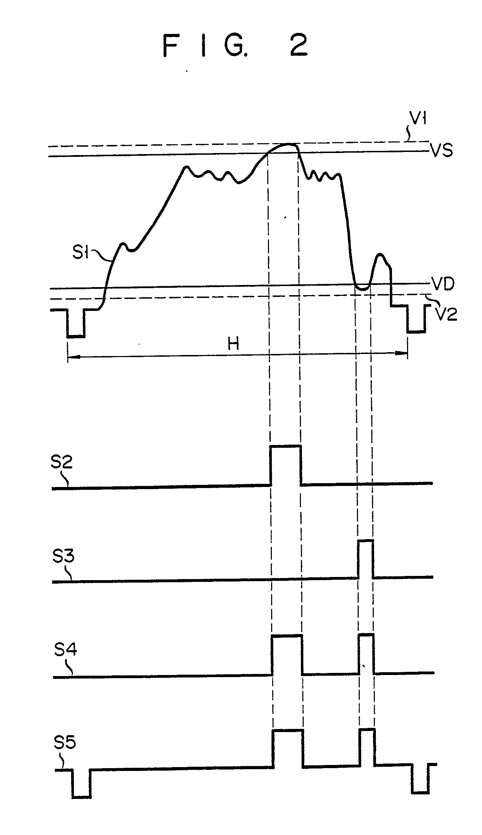

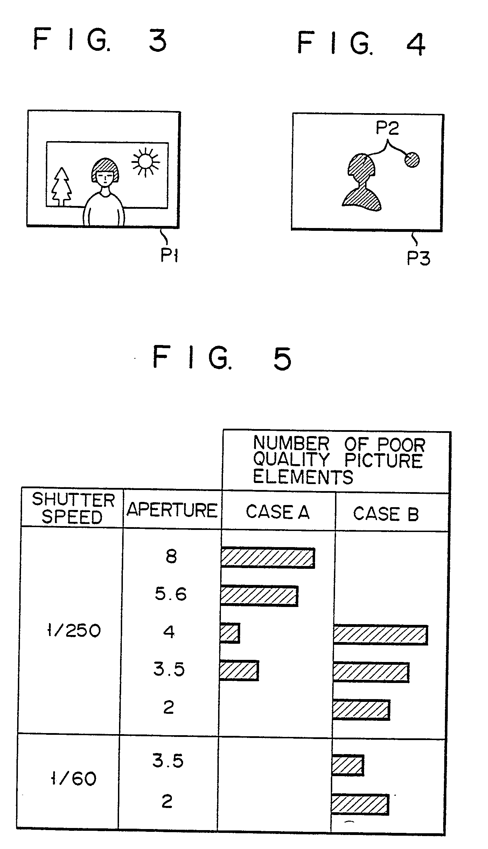

An image confirmation switch 26 is operated in the case where the image needs only to be confirmed without being recorded. The following operation is carried out when switch 26 is operated. When the switch 26 is pushed, the optical image on the photosensor 6 under manually-set aperture and shutter speed is read out as an electric signal by the photosensor driver 18. The electric signal is amplified by an amplifier A and supplied to a signal processing circuit 27 and converted to an NTSC standard composition video signal. The video signal is applied to comparators 28, 29, a video signal composition circuit 30, and the full-area averaging circuit 14 when the reproduction switch 24 contacts the contact c1. The composition video signal S1 (Fig. 2) supplied to the comparator 28 is converted to a binary signal having logic 1 when it exceeds the white level VS which has been set slightly lower than its saturation level, or to a binary signal having logic 0 when it does not exceed the white level VS. Similarly, the composition video signal supplied to the comparator 29 is converted to logic level 1 when it exceeds reference value VD which has been set slightly higher than its black level V2, or to the logic level 0 when it does not exceed the reference value VD. AND gates 31 and 32 are provided to obtain binary signals S2 and S3 which are formed after removing the retracing signal components from the output signals of the comparators 28 and 29. The binary signals S2 and S3 may be used independently, or they may be applied to an OR gate 33 and converted to a binary signal S4. The binary signal S4 represents the poor quality image signal. The poor quality image signal S4 is supplied to the signal processing circuit 35 to be gain-controlled at a proper value and added with the synchronizing signal extracted from the original video signal. The signal processing circuit 35 produces a binary video signal S5 which represents a poor quality image, when a switch 34 is contacted with contact 1. In the case of the image shown in Fig. 3, that is, a scene in which a person stands beside a window with a strong amount of light, a binary image which represents a poor quality image P2 shown in Fig. 4 is obtained when the image confirmation switch 26 is pushed. According to the binary image, the person who is backlit is underexposed while the sun is overexposed. These objects are represented by the poor quality images P2.

Again, referring to Fig. 1, the binary video signal obtained from the signal processing circuit 35 is supplied to the video signal composition circuit 30 which supplies the binary video signal, output signal or analog video signal of the signal processing circuit 27 to the display 10 according to the selection made by the display image selection switch 36. When both the binary and analog video signals are selected by the display image selection switch 36, the composition signal of both video signals is supplied to the display 10 where a composition image is displayed. A brightness adjusting circuit 37 is connected between the video signal composition circuit 30 and the display 10 to adjust the brightness of the display image. If the display 10 is turned off, an image based on the optical finder can be viewed.

As described above, an over- and/or underexposed binary image is two-dimensionally displayed in the electric finder or display 10 every time when the image confirmation switch 26 is pushed, because the analog video signal is converted to a binary video signal according to the white and black reference levels. Therefore, it can be judged reliably and speedily from the displayed binary image whether a picture to be photographed is correctly exposed or not. In this way the photographing apparatus of the present invention can be applied to a specific photographing condition which can not be processed by the full-area averaging circuit. Since the latitude of video is narrower than that of film, the picture quality evaluation achieved by the present invention is useful.

Next will be described a case where a two-dimensional picture quality evaluation is applied to automatic exposure. When the continuous mode is set by the image confirmation switch 26, the shutter speed automatically and continuously varies when in the aperture-priority preference, while the aperture automatically and continuously varies when in shutter-priority. A video signal responsive to the changing aperture and shutter speed is supplied to the comparators 28 and 29. Output signals of the comparators 28 and 29 are supplied to the OR gate 33 and output as a poor quality image signal through the OR gate 33.

When the switch 34 contacts a contact 5, the poor quality image signal is supplied to an image logical circuit 39, which samples the poor quality image signal, divides it into picture elements, and logically processes them. In the logical process, part of the finder screen or its central portion, for example, is masked and only the poor quality image signal in the important section of the image is processed as an effective signal. When the picture elements are combined in a 2-by-2, or 3-by-3 section and only one or two poor quality elements are present in the section, these poor quality picture elements are ignored. Namely, if a few poor quality picture-elements in a micro-area they are made ineffective. Other poor quality picture elements left after the logical process are measured by a poor quality picture element integrating circuit (or a poor quality picture element counter) 40.

The above process can be carried out in taking several different exposures of the same subject. The result obtained is evaluated by a minimum value detecting circuit 41 to calculate the exposure condition under which the number of the poor quality picture elements becomes minimum. Information regarding the exposure of each step is applied from the microcomputer 12 to the minimum value detecting circuit 41. Fig. 5 shows the conditions under which poor quality picture elements are caused in shutter-priority. According to Fig. 5, the best conditions are obtained in case A when the shutter speed is 1/250 sec., while the aperture is 4f. Similarly, in case B, the shutter speed can be 1/60 sec., while the aperture is 3.5f. This can be established in shutter-priority or program automation.

Since the above-described automatic image evaluation or estimation is done electrically, in real time, sixty conditions can be checked every second if the apparatus is operated under the mode which corresponds to the NTSC standard television system. When a mechanical shutter and aperture are employed, the number of conditions which can be checked every second decreases because the operation speeds of the shutter and aperture are limited, but when a physical shutter and aperture which includes no mechanically-actuating member is employed, it becomes possible to check sixty conditions every second.

In a case where a binary image memory 42 is used in the circuit shown in Fig. 1, the switch is contacted by one of the contacts 2, 3 or 4. It is difficult to determine the conditions when an artificial light source such as the electric flash device should be used. The poor quality image signal which represents the output of the OR circuit 33 may be stored in the binary image memory 42. For example, if a poor quality image signal obtained under a specific shutter speed and aperture is stored in an area M1 of the binary image memory 42, and other poor quality image signals obtained under other conditions with the switch 34 are then stored in areas M2 and M3 of the binary image memory 42. This process is similar to that of the stepping exposure often employed in photography, where the result is stored in the binary image memory.

Several poor quality image signals are read out of the binary image memory 42 and are transferred to the image logical circuit 39, which applies AND, OR exclusive OR gating or masking to the poor quality image signals, if necessary, to remove noise and the like from these signals in the image logical process. The image logical circuit 39, which has done the image logical process, supplies its output signal to the display 10 via the signal processing circuit 35 to be displayed as a poor quality image. By viewing the image displayed on the display 10, the photographer can judge accurately the latitude of an object of the finder screen at a wide range and can select the optimum photographing condition. If, on the basis of the displayed image information, it is judged that the object to be photographed exceeds the latitude of video system, the same object can be recorded under plural photographing conditions. According to this system, the capacity of the memory can be reduced because the image signal is stored as a binary signal.

As described above, a video signal is converted to binary video signals responsive to those reference levels which are close to its white and black levels. The binary video signals are then two-dimensionally displayed, as an over- and underexposed image. Therefore, the present invention enables the exposure to be speedily and accurately understood. As a result, the optimum value of the exposure can be determined, and automatic exposure control can be achieved.

Furthermore, the apparatus of this invention eliminates the drawbacks of the prior art image pick-up system and can perform various photographing functions which have heretofore been impossible in the film camera. According to this invention, the following advantages are obtained:

(1) The apparatus eliminates any ambiguous image which has otherwise been emerged in the conventional photographing apparatus using the full-area averaging method and it is possible to determine an image quality for a two-dimensional image.

(2) The image representing the image quality can be maintained in a one-to-one positional relation to a real image.

(3) It is possible to achieve an automatic operation due partly to the advantage (1) and due partly to the advantage (2).

(4) It is possible to properly set the recording conditions in a recording mode, as well as to evaluate the image which has already been recorded.

(5) It is possible to obtain a one-to-one correspondence between an optical image and an electric image.

(6) The image degradation, for example, which occurs when the FM-recording method and modulation method are used can be adequately checked in the recording operation, preventing the occurrence of any undesired color spots.

(7) It is possible to select either one of an optical finder and an electronic finder.

According to this invention it is possible to obtain finder devices and image evaluation device applicable to, for example, an image measuring and image processing apparatus using an ITV camera, a video movie system, an electronic process apparatus, a TV camera, a VTR camera or an electronic still camera.

The operation switches and modes used in the embodiments of this invention may be replaced by another member and mode, respectively, depending upon the use to which they are put. According to this invention it is possible to use various kinds of circuit systems. It is also possible to use, for example, an optical disk, magnetic disk, magnetic tape or an image memory, such as a solid state memory as a recording/reproducing section. The two-dimensional display may be comprised of a liquid crystal display or a light emitting diode display. An optical filter, which can form a properly viewable color contrast, may be provided on the whole surface of the display.

**Claims**

1. An electronic photographing apparatus with electronic photographing means for converting an image to be photographed to a video signal and

means for converting the video signal to a binary signal characterized by comprising:

binary coding means (28, 29) for converting the video signal to a binary signal by comparing said video signal with first and second reference levels (VS, VD) which are close to most white and black levels (V1, V2) of the video signals, said binary signal corresponding to at least one over- and underexposure;

signals processing means (35) for converting the binary signal of said binary coding means to a binary video signal; and

means (10) for displaying an image according to its over- and/or underexposure when said binary video signal is supplied to the display of the electric finder and for displaying said binary video signal of said signal processing means as a two-dimensional optical image.

2. An electronic photographing apparatus according to claim 1, characterized in that said electronic photographing means comprises a photosensor (6) for converting the image to an electric signal, optical means (2) for imaging the image to said photosensor, and signal processing means (27) for signal-processing and converting the electric signal of said photosensor to the video signal.

3. An electronic photographing apparatus according to claim 1, characterized in that said binary coding means comprises a first comparator (28) for comparing the video signal with the first reference level and converting it to the first binary signal according to the first reference level, a second comparator (29) for comparing the video signal with the second reference level and converting it to the second binary signal according to the second reference level, and means (31, 32) for removing retracing signal components of the video signal from the first and second binary signals of said first and second comparators (28, 29).

4. An electronic photographing apparatus according to claim 3, characterized in that said binary coding means includes means (33) for composing the first and second binary signals from which the retracting signal components have been removed.

5. An electronic photographing apparatus according to claim 1, characterized by further comprising means (34) for selectively supplying a composition signal to said display means, said composition signal being obtained by composing the video signal with the binary video signal.

6. An electronic photographing apparatus according to claim 1, characterized by further comprising memory means (42) for storing said binary video signal and wherein said display means is electronic display means (10) for displaying a video signal from the memory means (42).

7. An electronic photographing apparatus according to claim 1, characterized by further comprising a plurality of memory means (M1, M2, M3) for storing binary video signals corresponding to said white and said black level and means (30) for simultaneously reading binary video signals from said memory means and for combining readout binary video signals into a composite video signal and wherein said display means is means (10) for displaying the composite video signal of said combining means as a composite image.

8. An electronic photographing apparatus according to claim 1, characterized by further comprising means (37) for adjusting brightness and means for stopping the function of said brightness adjusting means.

9. An electronic photographing apparatus according to claim 1, characterized in that said display means (10) is a liquid crystal display.

10. An electronic photographing apparatus according to claim 1, characterized in that said display means (10) is a light emitting diode display.

11. An electronic photographing apparatus according to claim 1, characterized in that said display means (10) has an optical filter which forms a properly viewable color contrast.

12. An electronic photographing apparatus according to any one of claims 1 to 11, characterized by comprising:

means (16, 17) for automatically adjusting the exposure responsive to the binary signal of said binary coding means.

13. An electronic photographing apparatus according to any one of claims 1 to 11, characterized in that said automatic exposure adjusting means comprises means (3, 5) arranged at said optical means and intended to control the amount of light of said image on said photosensor.

**Patentansprüche**

1. Elektronischer Fotoapparat mit einer elektronischen Fotografiereinrichtung zur Umwandlung eines zu fotografierenden Bildes in ein Videosignal und mit Einrichtungen zum Umwandeln des Videosignals in ein Binärsignal, gekennzeichnet durch:

binäre Kodiereinrichtungen (28, 29) zum Umwandeln des Videosignals in ein Binärsignal durch Vergleich des Videosignals mit ersten und zweiten Referenzpegeln (VS, VD) welche nahe den maximal weißen und maximal schwarzen Pegeln (V1, V2) des Videosignals sind, wobei das Binärsignal wenigstens einer Über- und Unterbelichtung entspricht;

Signalverarbeitungseinrichtungen (35) zum Umwandeln des Binärsignals von den binären Kodiereinrichtungen in ein binäres Videosignal; und

Einrichtungen (10) zur Anzeige eines Bildes gemäß seinen Über- und/oder Unterbelichtungen, wenn das binäre Videosignal zur Anzeige dem elektrischen Sucher zugeführt wird und zur Anzeige des binären Videosignals der Signalverarbeitungseinrichtungen als zweidimensionales optisches Bild.

2. Elektronischer Fotoapparat nach Anspruch 1, dadurch gekennzeichnet, daß die elektronischen Fotografieeinrichtungen einen Fotosensor (6) zur Umwandlung des Bildes in ein elektrisches Signal, optische Einrichtungen (2) zur Darstellung des Bildes auf dem Fotosensor und Signalverarbeitungseinrichtungen (27) aufweisen, welche das elektrische Signal von dem Fotosensor signalverarbeiten und in das Videosignal umwandeln.

3. Elektronischer Fotoapparat nach Anspruch 1, dadurch gekennzeichnet, daß die binären Kodiereinrichtungen einen ersten Komparator (28) zum Vergleichen des Videosignales mit dem ersten Referenzpegel und zu seiner Umwandlung in das erste Binärsignal abhängig von dem ersten Referenzpegel, einen zweiten Komparator (29) zum Vergleichen des Videosignals mit dem zweiten Referenzpegel und zu seiner Umwandlung in das zweite Binärsignal abhängig von dem zweiten Referenzpegel und Einrichtungen (31, 32) aufweisen, um rücklaufende Signalkomponenten des Videosignals von den ersten und zweiten Binärsignalen der ersten und zweiten Komparatoren (28, 29) zu entfernen.

4. Elektronischer Fotoapparat nach Anspruch 3, dadurch gekennzeichnet, daß die binären Kodiereinrichtungen eine Einrichtung (33) aufweisen, zum Zusammensetzen der ersten und zweiten Binärsignale, von denen die rücklaufenden Signalkomponenten entfernt wurden.

5. Elektronischer Fotoapparat nach Anspruch 1, weiterhin gekennzeichnet durch eine Einrichtung (34) zum selektiven Zuführen eines Zusammensetzsignales an die Anzeigeeinrichtung, wobei das Zusammensetzsignal durch Zusammenfügen des Videosignals mit dem binären Videosignal erhalten wird.

6. Elektronischer Fotoapparat nach Anspruch 1, weiterhin gekennzeichnet durch eine Speichereinrichtung (42) zum Speichern des binären Videosignales, wobei die Anzeigeeinrichtung eine elektronische Anzeigeeinrichtung (10) zur Darstellung eines Videosignales aus der Speichereinrichtung (42) ist.

7. Elektronischer Fotoapparat nach Anspruch 1, weiterhin gekennzeichnet durch eine Mehrzahl von Speichereinrichtungen (M1, M2, M3) zum Speichern binärer Videosignale entsprechend den weißen und schwarzen Pegeln und Einrichtungen (30) zum gleichzeitigen Lesen der binären Videosignale aus den Speichereinrichtungen und zum Kombinieren der ausgelesenen binären Videosignale in ein zusammengesetztes Videosignal, wobei die Anzeigeeinrichtung eine Einrichtung (10) zur Anzeige des zusammengesetzten Videosignals von der Kombiniereinrichtung als zusammengesetztes Bild ist.

8. Elektronischer Fotoapparat nach Anspruch 1, weiterhin gekennzeichnet durch eine Einrichtung (37) zur Einstellung von Helligkeit und Einrichtungen zum Unterbinden der Arbeitsweise der Helligkeits-Einstelleinrichtung.

9. Elektronischer Fotoapparat nach Anspruch 1, dadurch gekennzeichnet, daß die Anzeigeeinrichtung (10) eine Flüssigkristallanzeige ist.

10. Elektronischer Fotoapparat nach Anspruch 1, dadurch gekennzeichnet, daß die Anzeigeeinrichtung (10) eine Anzeige aus lichtemittierenden Dioden ist.

11. Elektronischer Fotoapparat nach Anspruch 1, dadurch gekennzeichnet, daß die Anzeigeeinrichtung (10) ein optisches Filter aufweist, welches einen geeignet beobachtbaren Farbkontrast bildet.

12. Elektronischer Fotoapparat nach einem der Ansprüche 1 bis 11, gekennzeichnet durch:

Einrichtungen (16, 17) zur automatischen Einstellung der Belichtung abhängig von dem Binärsignal der binären Kodiereinrichtungen.

13. Elektronischer Fotoapparat nach einem der Ansprüche 1 bis 11, dadurch gekennzeichnet, daß die Einrichtung zur automatischen Einstellung der Belichtung Einrichtungen (3, 5) aufweist, welche an der optischen Einrichtung angeordnet sind und vorgesehen sind, die Menge von Licht, die von dem Bild auf den Fotosensor fällt, zu regeln.

**Revendications**

1. Appareil photographique électronique avec un moyen de photographie électronique pour convertir une image à photographier en signal vidéo et un moyen pour convertir le signal vidéo en signal binaire, caractérisé en ce qu'il comporte:

un moyen (28, 29) de codage binaire pour convertir le signal vidéo en signal binaire en comparant ledit signal vidéo avec des premier et second niveaux de référence (VS, VD) proches de la plupart des niveaux (V1, V2) de blanc et de noir des signaux vidéo, ledit signal binaire correspondant à au moins une sur- ou sous-exposition;

un moyen (35) de traitement de signaux pour convertir en signal vidéo binaire le signal binaire dudit moyen de codage binaire; et

un moyen (10) pour visualiser une image selon sa sur- et/ou sous-exposition lorsque ledit signal vidéo binaire est fourni à la visualisation du viseur électrique et pour visualiser sous la forme d'une image optique à deux dimensions ledit signal vidéo binaire dudit moyen de traitement de signaux.

2. Appareil photographique électronique selon la revendication 1, caractérisé en ce que ledit moyen de photographie électronique comporte un photodétecteur (6) pour convertir l'image en signal électrique, un moyen optique (2) pour former l'image sur le photodétecteur, et un moyen (27) de traitement de signaux pour le traitement des signaux et pour la conversion du signal électrique dudit photodétecteur en signal vidéo.

3. Appareil photographique électronique selon la revendication 1, caractérisé en ce que le dit moyen de codage binaire comporte un premier comparateur (28) pour comparer le signal vidéo avec le premier niveau de référence et le convertir en premier signal binaire en fonction du premier niveau de référence, un second comparateur (29) pour comparer le signal vidéo avec le second niveau de référence et le convertir en second signal binaire en fonction du second niveau de référence, et un moyen (31, 32) pour éliminer des premier et second signaux binaires desdits premier et second comparateurs (28, 29) les composantes de signal de retour du signal vidéo.

4. Appareil photographique électronique selon la revendication 3, caractérisé en ce que le moyen de codage binaire comprend un moyen (33) pour composer les premier et second signaux binaires desquels ont été éliminées les composantes de signal de retour.

5. Appareil photographique électronique selon la revendication 1, caractérisé en ce qu'il comporte en outre un moyen (34) pour fournir sélectivement un signal de composition audit moyen de visualisation, ledit signal de composition étant obtenu en composant le signal vidéo avec le signal vidéo binaire.

6. Appareil photographique électronique selon la revendication 1, caractérisé en ce qu'il comporte en outre une mémoire (42) pour mémoriser ledit signal vidéo binaire, et dans lequel ledit moyen de visualisation est un moyen de visualisation électronique (10) pour visualiser un signal vidéo issu de la mémoire (42).

7. Appareil photographique électronique selon la revendication 1, caractérisé en ce qu'il comporte en outre une pluralité de moyens de mémorisation (M1, M2, M3) pour mémoriser des signaux vidéo binaires correspondant audits niveaux de blanc et de noir, et un moyen (30) pour extraire simultanément des signaux vidéo binaires desdits moyens de mémorisation et pour combiner les signaux vidéo binaires extraits en un signal vidéo composite, et dans lequel ledit moyen de visualisation est un moyen (10) pour visualiser sous la forme d'une image composite le signal vidéo composite dudit moyen de combinaison.

8. Appareil photographique électronique selon la revendication 1, caractérisé en ce qu'il comporte en outre un moyen (37) pour régler la luminosité et un moyen pour arrêter le fonctionnement dudit moyen de réglage de luminosité.

9. Appareil photographique électronique selon la revendication 1, caractérisé en ce que ledit moyen de visualisation (10) est un affichage à cristaux liquides.

10. Appareil photographique électronique selon la revendication 1, caractérisé en ce que ledit moyen de visualisation (10) est un affichage à diodes électroluminescentes.

11. Appareil photographique électronique selon la revendication 1, caractérisé en ce que le moyen de visualisation (10) a un filtre optique qui forme un contraste de couleur bien perceptible.

12. Appareil photographique électronique selon l'une quelconque des revendications 1 à 11, caractérisé en ce qu'il comporte:

un moyen (16, 17) pour régler automatiquement l'exposition en réponse au signal binaire dudit moyen de codage binaire.

13. Appareil photographique électronique selon l'une quelconque des revendications 1 à 11, caractérisé en ce que ledit moyen de réglage automatique de l'exposition comporte des moyens (3, 5) disposés dans ledit moyen optique et servant à commander la quantité de lumière de ladite image sur ledit photodétecteur.

F I G. 1

# F I G. 2

# F I G. 3

P1

# F I G. 4

P2

P3

# F I G. 5

| SHUTTER SPEED | APERTURE | NUMBER OF POOR QUALITY PICTURE ELEMENTS | |
|---|---|---|---|
| | | CASE A | CASE B |
| 1/250 | 8 | ▨▨▨▨▨ | |
| | 5.6 | ▨▨▨▨ | |
| | 4 | ▨ | ▨▨▨▨▨ |
| | 3.5 | ▨▨ | ▨▨▨▨ |
| | 2 | | ▨▨▨ |
| 1/60 | 3.5 | | ▨▨ |
| | 2 | | ▨▨▨ |

3